# FASCICULE DE BREVET EUROPEEN

(11) **EP 2 369 700 B1**
(45) Date de publication et mention de la délivrance du brevet: **10.07.2013**
(21) Numéro de dépôt: 11290127.7
(22) Date de dépôt: 11.03.2011
(51) Int. Cl.: H02B 1/42

(54) **Coffret ou tableau de distribution électrique, équipé de supports de rail à pivot glissant**
Elektrischer Verteiler- oder Schaltkasten, der mit Schienenführungen für Gleitzapfen ausgestattet ist
Power distribution box or panel provided with rail supports with sliding pivot

(30) Priorité: 22.03.2010 FR 1001121
(43) Date de publication de la demande: 28.09.2011
(73) Titulaire: Legrand France, 87000 Limoges (FR); Legrand SNC, 87000 Limoges (FR)
(72) Inventeur: Baudou, Alain, 87000 Limoges (FR); Normand, Romain, 87000 Limoges (FR); Sonnet, Olivier, 87270 Bonnac-la-Côte (FR)
(74) Mandataire: Orsini, Fabienne

(56) Documents cités:
- EP-A1- 1 615 308
- DE-U- 1 993 996

## Description

La présente invention concerne de manière générale la distribution de courant électrique dans un bâtiment.

Elle concerne plus particulièrement un coffret ou tableau de distribution électrique tel que défini dans le préambule de la revendication 1.

### ARRIERE-PLAN TECHNOLOGIQUE

Dans les coffrets et tableaux de distribution électrique du type précité, il est généralement prévu au moins deux rails de montage positionnés parallèlement et à distance l'un de l'autre pour porter des appareillages électriques modulaires sur deux rangées d'appareillages espacées l'une de l'autre.

Les entrées de conducteurs électriques des appareillages électriques modulaires de l'une des rangées sont alors tournées vers l'autre rangée. Or, la distance laissée libre entre les deux rangées est généralement réduite, de l'ordre de 40 à 90 millimètres.

Par conséquent, ces entrées de conducteurs électriques sont non seulement difficilement visualisables, mais en outre difficilement accessibles lorsque l'on souhaite y brancher des conducteurs électriques relativement rigides. Le branchement des conducteurs électriques dans les appareillages électriques modulaires s'avérant dès lors complexe à réaliser, la connexion électrique qui en résulte est souvent de piètre qualité et génère des pertes résistives et des échauffements importants.

Une solution connue pour faciliter le branchement des conducteurs électriques consiste alors à monter chaque rail de montage de manière mobile dans le coffret ou tableau de distribution électrique, par exemple au moyen de deux supports de rail du type précité.

On connaît en particulier du document EP 1 615 308 un support de rail qui se présente sous la forme d'un profilé de section en U, à engager sur un longeron du châssis du coffret ou tableau de distribution électrique. La partie centrale de la face avant de ce profilé forme la plate-forme d'accueil du rail de montage tandis que l'une des extrémités de ce profilé est articulée sur le longeron correspondant. De cette manière, le rail de montage est monté mobile sur le châssis suivant une trajectoire en arc-de-cercle.

Grâce à cette mobilité, le rail de montage peut être écarté du rail de montage voisin, ce qui facilite l'accès aux entrées des appareillages électriques modulaires portés par ce rail de montage voisin.

L'inconvénient de ce support de rail est que son utilisation ne permet pas de dégager directement les entrées des appareillages électriques modulaires du rail de montage qu'il supporte. Par conséquent, lorsque ce rail de montage est positionné à proximité d'une paroi du coffret ou tableau de distribution électrique, rien ne permet de faciliter l'accès aux entrées des appareillages électriques modulaires qu'il porte.

Par ailleurs, la trajectoire en arc de cercle du rail de montage nécessite un dégagement important pour faire pivoter les appareillages électriques modulaires, ce qui est incompatible avec l'objectif recherché de réduction du volume des coffrets et tableaux de distribution électrique. Cette trajectoire en arc de cercle nécessite en outre l'utilisation d'un câble d'alimentation électrique des appareillages électriques modulaires de longueur suffisante pour ne pas bloquer cette mobilité, ce qui est également incompatible avec le volume réduit qu'offrent les coffrets et tableaux de distribution électrique pour loger ce câble d'alimentation.

On connaît également du document DE 1 993 996 un coffret de distribution électrique comportant :
- un châssis avec un fond et quatre parois latérales, dont deux parois latérales en vis-à-vis portant deux pions,
- un rail de montage d'appareillage électrique modulaires, et
- deux supports de rail en forme de L, avec une partie qui forme une plate-forme d'accueil d'une extrémité du rail, et une autre partie qui est monté mobile à rotation sur le pion porté par la paroi latérale correspondante du châssis.

Dans ce document, les opérations d'assemblage du coffret et de basculement du rail nécessitent l'utilisation de tournevis, si bien qu'elles s'avèrent fastidieuses pour l'installateur.

L'opération de montage nécessite en particulier de visser le rail de montage sur les supports alors que ces derniers sont déjà en place sur les pions des parois latérales du châssis, ce qui s'avère en pratique malcommode.

L'inclinaison du rail est par ailleurs peu aisée puisqu'elle nécessite de dévisser une vis difficile d'accès.

### OBJET DE L'INVENTION

Afin de remédier aux inconvénients précités de l'état de la technique, l'invention propose un nouveau coffret ou tableau de distribution électrique qui facilite l'installation et le branchement des appareillages électriques modulaires.

Plus particulièrement, l'invention propose un coffret ou tableau de distribution électrique tel que défini dans la revendication 1.

Les pivots sont agencés de telle manière que l'axe de pivot des supports de rail est situé derrière le rail de montage. Cet axe est plus précisément situé à l'arrière du rail de montage, dans l'espace délimité par les deux demi-plans qui s'étendent respectivement à partir des deux bords longitudinaux du rail de montage, perpendiculairement à celui-ci. Cet axe de pivot est préférentiellement situé dans le plan médian du rail de montage.

De cette manière, les pivots permettent au rail de montage de pivoter presque sur place, de manière que son basculement nécessite un dégagement réduit et une longueur de câble d'alimentation réduite.

Plus précisément, lorsque le rail de montage bascule, la position de l'axe de pivot permet à la plate-forme et aux appareillages électriques modulaires de décrire un mouvement en arc de cercle de rayon de courbure réduit. Ainsi, les câbles d'alimentation électrique subissent des contraintes réduites. Il est en outre ainsi possible de faire basculer un rail de montage indépendamment des autres rails de montage, sans que les appareillages électriques modulaires portés par ce rail ne viennent buter contre les appareillages électriques modulaires des autres rails de montage.

Le montage du support de rail à coulissement sur le rail de montage (par « les moyens de montage à coulissement ») et sur le châssis (par « la liaison pivot glissant ») permet par ailleurs de fixer le rail de montage sur le châssis et de le faire basculer plus facilement. En effet, il suffit simplement pour cela de faire coulisser le support de rail pour verrouiller ou déverrouiller les premiers moyens de verrouillage, sans l'aide d'outils particuliers.

D'autres caractéristiques avantageuses et non limitatives du coffret ou tableau de distribution électrique conforme à l'invention sont définies dans les revendications 2 à 7.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un coffret de distribution électrique selon l'invention, sur laquelle apparaît un châssis portant, via trois paires de supports de rail, trois rails de montage d'appareillages électriques modulaires ;
- la figure 2 est une vue schématique de côté du coffret de distribution électrique de la figure 1, dans lequel l'un des rails de montage est en position droite tandis qu'un autre des rails de montage est en position basculée ;

- la figure 3 est une vue schématique en perspective d'un montant prévu sur le châssis de la figure 1 pour accueillir un support de rail ;
- la figure 4 est une vue schématique en perspective de l'un des supports de rail de la figure 1 ;
- la figure 5 est une vue schématique en perspective d'un détail du support de rail de la figure 4 ;
- la figure 6 est une vue schématique en perspective d'un détail de l'un des rails de montage de la figure 1 ;
- les figures 7 à 9 sont des vues schématiques en perspective arrière, en perspective avant et en coupe du rail de montage de la figure 6 pré-assemblé au support de rail de la figure 4 ;
- les figures 10 et 11 sont des vues schématiques en perspective avant et en coupe du rail de montage de la figure 6 fixé en position de libération sur le support de rail de la figure 4 ;
- les figures 12 et 13 sont des vues schématiques en coupe et en perspective avant du rail de montage de la figure 6 fixé en position d'activation sur le support de rail de la figure 4 ;
- les figures 14 et 15 sont des vues schématiques en coupe du rail de montage de la figure 6 et du support de rail de la figure 4, montés en position droite et basculée sur le châssis du coffret de distribution électrique de la figure 1.

Un coffret ou tableau de distribution électrique est un appareil électrique qui permet, d'une part, de répartir le courant provenant d'un réseau électrique extérieur vers chacun des circuits d'un réseau électrique local d'une habitation, et, d'autre part, de couper l'alimentation de ces circuits en cas de surintensité.

Un tel coffret ou tableau de distribution électrique se présente généralement sous la forme d'un boîtier logeant des appareillages électriques modulaires, tels que des disjoncteurs.

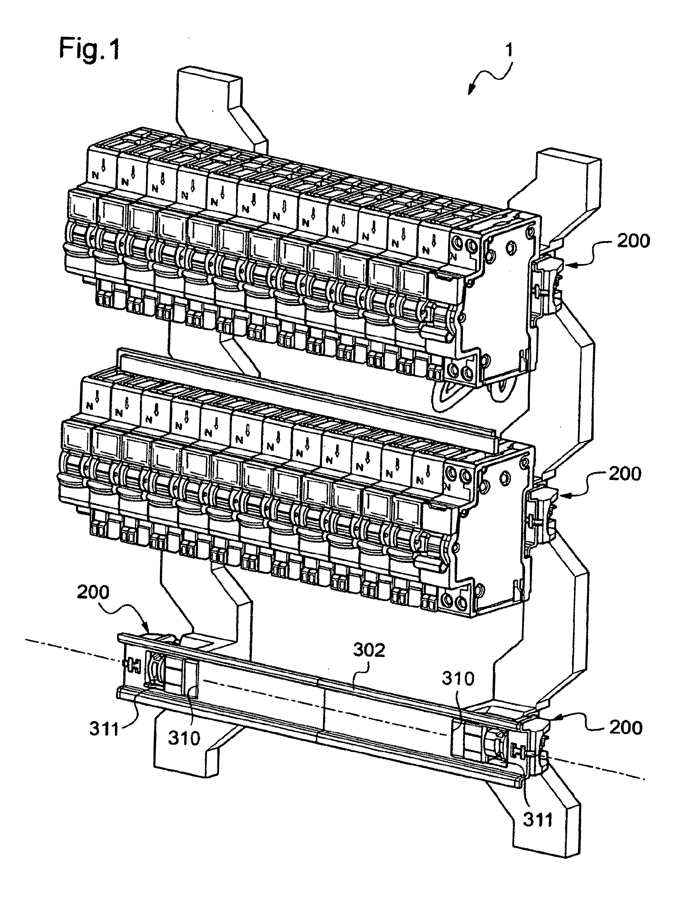

Tel que représenté sur la figure 1, le coffret de distribution électrique 1 comporte à cet effet un châssis 100 à fixer verticalement sur une paroi murale, trois rails de montage 300 à fixer horizontalement sur le châssis pour porter trois rangées 400 de disjoncteurs 401, et un capot de fermeture (non représenté).

En préliminaire, on utilisera dans la description les termes « avant » et « arrière » suivant le sens du regard de l'installateur vers la paroi murale, l'arrière désignant la zone située du côté de cette paroi murale et l'avant désignant la zone située du côté opposé, vers l'installateur. Les termes « intérieur » et « extérieur » seront quant à eux utilisés par rapport au centre du châssis, l'intérieur désignant la zone située du côté du centre du châssis et l'extérieur désignant la zone située du côté opposé.

Le capot de fermeture est conçu pour protéger les disjoncteurs 401. Il comporte à cet effet une paroi avant plane présentant des ouvertures d'accès aux disjoncteurs 401, et une paroi latérale agencée pour se fixer au châssis 100.

Le châssis 100 est ici formé de deux longerons 101 agencés pour être fixés verticalement et côte-à-côte sur la paroi murale, de telle manière que les rails de montage 300 puissent s'étendre horizontalement entre ces deux longerons 101.

Chaque longeron 101 présente une face arrière 102 à appliquer contre la paroi murale et une face avant opposée. Les faces arrière 102 de ces longerons 101 forment alors le fond du châssis 100.

Chaque longeron 101 comporte par ailleurs, à chacune de ses extrémités, une ouverture (non représentée) d'accueil d'une vis de fixation du châssis 100 à la paroi murale.

Chaque longeron 101 est ici formé d'une seule pièce par moulage d'une matière plastique isolante.

En variante, ce châssis pourrait se présenter sous une forme différente, telle que sous la forme d'une plaque rectangulaire présentant quatre ouvertures d'accueil de vis de fixation, respectivement situées à ses quatre coins. Dans cette variante, la face arrière de cette plaque rectangulaire formerait alors le fond du châssis.

Chaque rail de montage 300 se présente ici sous la forme d'un profilé métallique.

Ces rails de montage 300 comportent plus précisément chacun une paroi principale 301 plane et rectangulaire, qui est allongée suivant un axe de montage A1 et qui s'étend, en position d'utilisation, dans un plan parallèle au fond du châssis 100. Les deux bords latéraux de cette paroi principale 301 sont repliés vers l'avant du rail de montage 300 pour former deux ailes latérales 302 présentant chacune une section transversale en L, avec une partie 302A qui s'élève à partir de la paroi principale 301, orthogonalement à celle-ci, et une partie 302B repliée à angle droit vers l'extérieur du rail de montage 300.

Chaque rail de montage 300 est ici formé d'une seule pièce par découpe et pliage d'un feuillard métallique.

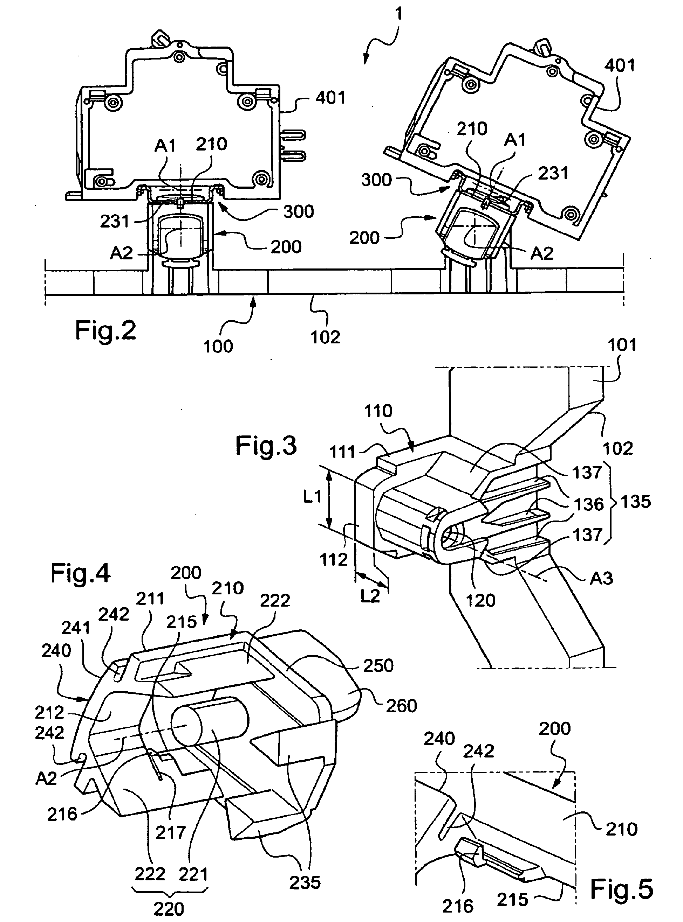

Comme le montrent plus particulièrement les figures 1 et 2, le coffret de distribution électrique 1 comporte en outre trois paires de supports de rail 200 fixés aux longerons 101 du châssis 100 et supportant les extrémités des trois rails de montage 300. Ces supports de rail 200 sont chacun réalisés d'une seule pièce en matière isolante. Ils sont conçus pour supporter l'une des extrémités d'un unique rail de montage et pour lui permettre de basculer, indépendamment des autres rails de montage, autour d'un axe de pivot A2 parallèle à l'axe longitudinal A1 de ce rail de montage. Ainsi basculé, l'accès aux entrées de câble des disjoncteurs 401 est facilité, ce qui simplifie leur branchement.

Chaque support de rail 200 comprend une plate-forme 210 agencée pour retenir une extrémité du rail de montage 300 correspondant (voir figure 4).

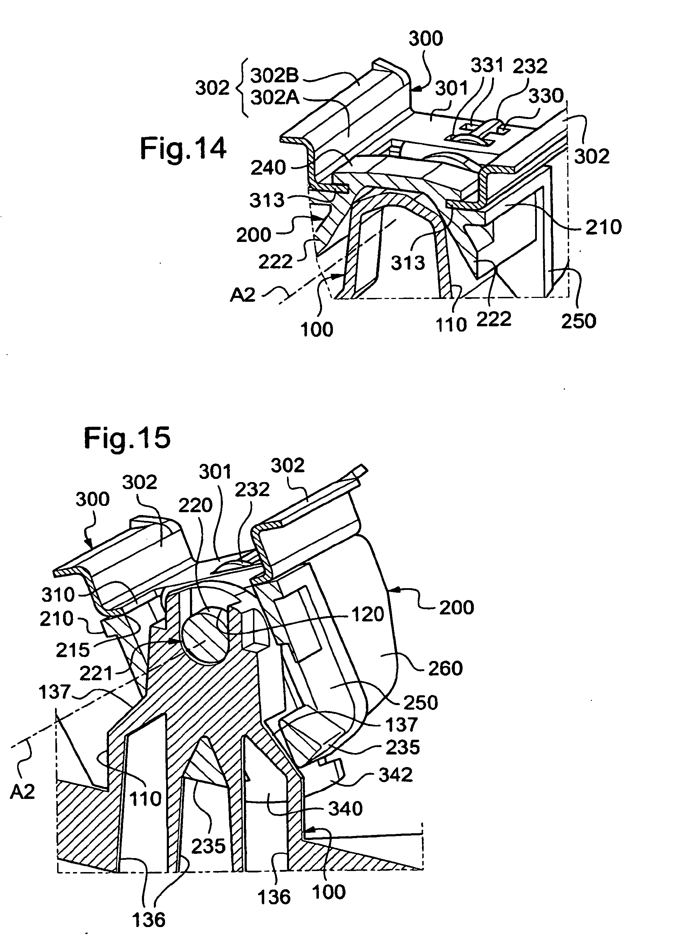

Chaque support de rail 200 comprend en outre, à l'arrière de cette plate-forme, un pivot 220 engagé dans un logement 120 du châssis 100 pour former une articulation permettant à la plate-forme de pivoter par rapport au châssis 100 autour de l'axe de pivot A2 (voir figure 15). Chaque rail de montage 300 est ainsi libre de pivoter entre une position droite dans laquelle sa paroi principale 301 s'étend sensiblement parallèlement au fond du châssis 100 (figure 14) et une position basculée dans laquelle sa paroi principale 301 est inclinée par rapport au fond du châssis 100 (figure 15).

Le pivot 220 de chaque support de rail est situé au droit de la plate-forme 210 de ce support de rail. De cette manière, l'axe de pivot A2 est situé à faible distance de l'axe longitudinal A1, si bien que l'espace de dégagement nécessaire au pivotement du rail de montage 300 et de ses disjoncteurs 401 est réduit.

Chaque support de rail 200 comprend par ailleurs des premiers moyens de verrouillage 230 du pivot 220 agencés pour bloquer le rail de montage 300 en position droite sur le châssis 100. Ces premiers moyens de verrouillage permettent ainsi de verrouiller toutes les mobilités des rails de montage 300, dans une position telle que le capot du coffret de distribution électrique 1 peut être rapporté sur le châssis 100, en position d'utilisation.

Chaque support de rail 200 comporte en outre des seconds moyens de verrouillage 230 du pivot 220 pour bloquer le rail de montage 300 en position basculée sur le châssis 100. Ces seconds moyens de verrouillage permettent ainsi de verrouiller toutes les mobilités des rails de montage, dans une position telle que les entrées de câble des disjoncteurs 401 sont facilement accessibles. Ainsi verrouillés, il n'est plus nécessaire de maintenir à la main le rail de montage 300 en position basculée pour intervenir sur les disjoncteurs 401.

Ici, ces seconds moyens de verrouillage sont agencés pour bloquer les rails de montage 300 en position basculée d'un côté ou de l'autre de leur position droite, c'est-à-dire vers le haut ou vers le bas. De cette manière, les disjoncteurs 401 peuvent être montés avec une orientation quelconque sur les rails de montage 300, de telle sorte que leurs entrées de câble débouchent vers le haut ou vers le bas du châssis 100. Il est par ailleurs ainsi possible de basculer deux rails de montage 300 adjacents dans des sens opposés, de manière à dégager un espace encore plus important entre les deux rangées 400 de disjoncteurs 401, pour faciliter l'accès aux entrées de câble de ces disjoncteurs 401.

Ces seconds moyens de verrouillage 230 sont préférentiellement agencés de telle sorte que les positions droite et basculée des rails de montage 300 sont séparées angulairement d'un angle compris entre 15 et 30 degrés, préférentiellement égal à 25 degrés.

Selon une caractéristique particulièrement avantageuse de l'invention, les supports de rail 200 sont montés à coulissement non seulement par rapport au châssis 100 mais aussi par rapport au rail de montage 300 qu'ils supportent. Ces supports de rail 200 sont ainsi libres de coulisser entre le châssis et le rail de montage, suivant l'axe longitudinal A1.

Les deux supports de rail 200 qui portent chaque rail de montage 300 sont ainsi libres de s'écarter ou de se rapprocher l'un de l'autre alors que le rail de montage 300 reste immobile par rapport au châssis 100. Cette mobilité de translation est ici exploitée de telle sorte que, lorsque les deux supports de rail 200 sont en position rapprochée, ils maintiennent le rail de montage 300 en position fixe par rapport au châssis 100, et que, lorsque les deux supports de rail 200 sont en position écartée, ils laissent le rail de montage 300 libre de basculer autour de l'axe de pivot A2.

Pour permettre à chaque support de rail 200 de coulisser sous le rail de montage 300 qu'il porte, ce support de rail 200 comprend des moyens de montage à coulissement 240 du rail de montage, qui sont situés sur sa plate-forme 210.

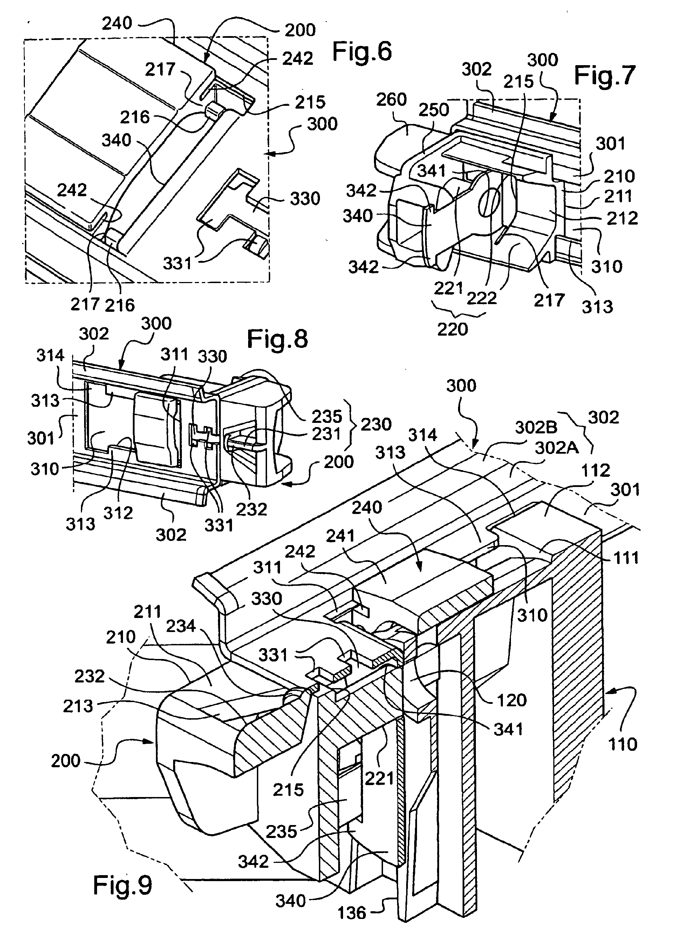

Comme le montrent les figures 4 et 9, cette plate-forme 210 présente globalement une forme de plaque rectangulaire épaisse, avec une face avant 211 plane contre laquelle s'applique la face arrière de la paroi principale 301 du rail de montage 300 et une face arrière 212 opposée. Cette plate-forme 210 s'étend ici en longueur suivant un axe parallèle à l'axe de pivot A2.

Les moyens de montage à coulissement 240 du rail de montage 300 sur cette plate-forme 210 comportent ici un plot 241 de forme parallélépipédique, qui s'élève à partir de la face avant 211 de la plate-forme 210, sur une faible hauteur. Ce plot 241 présente, sur ses deux tranches latérales, deux rainures 242 qui forment deux glissières d'axes parallèles à l'axe de pivot A2.

Comme le montre la figure 8, la paroi principale 301 du rail de montage 300 présente en correspondance, à chacune de ses extrémités, une ouverture d'accueil 310 du plot 241 du support de rail 200 correspondant.

Cette ouverture d'accueil 310 présente une partie d'engagement 311 dont la section présente une forme identique à celle du plot 241, pour permettre au plot 241 de passer au travers de l'ouverture 310 lorsque le rail de montage 300 est rapporté sur la plate-forme 210 du support de rail 200.

Cette ouverture d'accueil 310 présente par ailleurs une partie centrale 312 qui jouxte la partie d'engagement 311 et qui présente une largeur réduite par rapport à celle-ci, ce qui permet de définir deux languettes 313 faisant saillie en vis-à-vis dans l'ouverture d'accueil 310. Ces deux languettes 313 sont conçues pour s'engager dans les rainures 242 du plot 241 lorsque le rail de montage 300 coulisse sur la plate-forme 210 du support de rail 200 suivant l'axe longitudinal A1.

Ainsi, une fois les languettes 313 engagées dans les rainures 242 du plot 241, la seule et unique mobilité du rail de montage 300 par rapport au support de rail 200 est une mobilité de coulissement suivant l'axe longitudinal A1.

Pour bloquer rigidement le coulissement du rail de montage 300 sur la plate-forme 210, le support de rail 200 comporte des moyens d'arrêt 231 agencés pour coopérer avec des moyens d'arrêt complémentaires 331 du rail de montage 300.

Tels que représentés sur les figures 8 à 10, ces moyens d'arrêt 231 sont ici des moyens d'encliquetage. Ils comportent une patte d'encliquetage 232 agencée pour se clipser dans une ouverture d'arrêt 330 prévue en correspondance dans la paroi principale 301 du rail de montage 300.

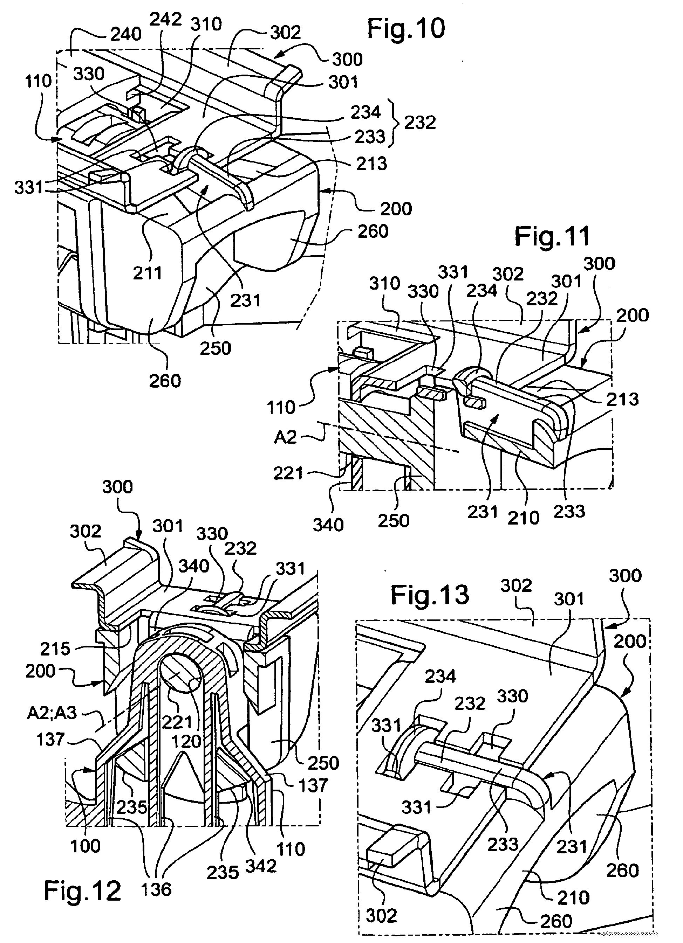

Comme le montre la figure 10, la patte d'encliquetage 232 présente une section transversale en forme de champignon, avec un pied 233 qui s'élève à partir d'un renfoncement 213 prévu sur la face avant 211 de la plate-forme 210, et une tête 234 en demi-disque d'axe parallèle à l'axe de pivot A2.

Le pied de la patte d'encliquetage 232 est ici formé par une nervure 233 qui s'étend en saillie du renfoncement 213 prévu sur la face avant 211 de la plate-forme 210, suivant l'axe de pivot A2.

La tête 234 de la patte d'encliquetage 232 s'étend quant à elle à partir de la nervure 233, dans un plan perpendiculaire à l'axe de pivot A2. Elle présente un bord arrière rectiligne et un bord avant en demi-cercle.

L'ouverture d'arrêt 330 prévue en correspondance dans la paroi principale 301 du rail de montage 300 s'étend en longueur suivant l'axe longitudinal A1, et débouche sur l'un des bords d'extrémité du rail de montage. Elle présente une largeur égale, au jeu près, à la largeur de la nervure 233. Elle présente par ailleurs deux élargissements 331 distincts, de largeurs égales à celle du bord arrière de la tête 234 de la patte d'encliquetage 232.

Ces moyens d'arrêt 231 permettent ainsi de fixer rigidement le rail de montage 300 sur la plate-forme 210 du support de rail en deux positions distinctes, selon que la tête 234 de la patte d'encliquetage 232 est engagée dans l'un ou l'autre des élargissements 331 de l'ouverture d'arrêt 330.

Grâce au renfoncement 213 prévu sur la face avant 211 de la plate-forme 210, la partie de la plate-forme 210 qui porte la patte d'encliquetage 232 est élastiquement déformable. Ainsi, un installateur appliquant avec l'un de ses doigts un effort à l'arrière de la plate-forme 210 peut surélever la tête 234 de la patte d'encliquetage 232 pour la placer au-dessus de la face avant de la paroi principale 301 du rail de montage 300, de manière à libérer le rail de montage 300 qui peut alors coulisser suivant son axe longitudinal A1 (voir figure 11).

L'assemblage du rail de montage 300 avec le support de rail 200 est réalisé de la manière suivante.

Le rail de montage 300 est tout d'abord rapporté sur la plate-forme 210 du support de rail 200 en engageant son ouverture d'accueil 310 sur le plot 241 de la plate-forme 210. Dans cette position, la patte d'encliquetage 232 du support de rail 200 est située à l'extérieur de l'ouverture d'arrêt 330 du rail de montage 300. Sa tête 234 est toutefois située contre le bord d'extrémité du rail de montage 300 (voir figures 8 et 9).

Pour engager la patte d'encliquetage 232 dans l'ouverture d'arrêt 330, l'installateur exerce alors un effort sous la plate-forme 210 du support de rail 200, en pinçant avec son pouce et son index le rail de montage 300 contre le support de rail 200. Une fois la tête 234 de la patte d'encliquetage 232 surélevée par rapport à la face avant de la paroi principale 301 du rail de montage 300, l'installateur peut alors faire coulisser le rail de montage 300 sur la plate-forme 210. En relâchant cet effort, la patte d'encliquetage 232 peut alors bloquer le rail de montage dans une première position, dite de libération, dans laquelle sa tête 234 est engagée dans l'élargissement extérieur 331 de l'ouverture d'arrêt 330 (voir figures 10 et 11) ou dans une seconde position, dite d'activation, dans laquelle sa tête 234 est engagée dans l'élargissement intérieur 331 de l'ouverture d'arrêt 330 (voir figures 12 à 14).

Selon l'invention, le pivot 220 du support de rail 200 coopère avec le logement 120 du châssis 100 pour former une liaison pivot glissant d'axe de pivot A2.

Le support de rail 200 est ainsi libre de se translater par rapport au châssis 100 suivant l'axe de pivot A2, de manière à ne pas entraver sa mobilité de translation par rapport au rail de montage 300 entre ladite position de libération et ladite position d'activation. Le support de rail 200 est également libre de pivoter entre une position droite dans laquelle sa plate-forme 210 s'étend sensiblement parallèlement au fond du châssis 100 (voir figure 14) et une position basculée dans laquelle sa plate-forme 210 est inclinée par rapport au fond du châssis 100 (voir figure 15).

Avantageusement, la mobilité de coulissement du pivot 220 est ici utilisé pour verrouiller ou déverrouiller la mobilité de pivotement du rail de montage 300 sur le châssis 100.

Tel que représenté sur les figures 4, 9 et 12, le pivot 220 du support de rail 200 comporte un arbre 221 cylindrique de révolution autour de l'axe de pivot A2.

Comme le montre plus particulièrement la figure 4, cet arbre 221 est porté par une paroi tombante 250 du support de rail 200 qui s'étend à partir de la face arrière 212 de la plate-forme 210, perpendiculairement à celle-ci et à l'axe de pivot A2, pour former un T avec cette plate-forme.

L'arbre 221 s'étend alors à partir de cette paroi tombante 250, vers l'intérieur du châssis 100, sur une longueur supérieure ou égale à celle séparant les deux élargissements 331 de l'ouverture d'arrêt 330 du rail de montage 300. De cette manière, lorsque le support de rail 200 coulisse sous le rail de montage 300 entre ladite position de libération et ladite position d'activation, son arbre 221 reste constamment engagé dans le logement 120 correspondant du châssis 100.

Cet arbre 221 est situé sur la paroi tombante 250 de telle sorte que l'écart entre l'axe de pivot A2 et l'axe longitudinal A1 est particulièrement faible.

Comme le montre plus particulièrement la figure 3, le châssis 100 comporte, pour supporter ce support de rail 200, un montant 110 qui s'élève à partir de la face avant du longeron 101 correspondant et qui présente une extrémité libre semi-cylindrique autour d'un axe de support A3.

Ce montant 110 comporte intérieurement un puits cylindrique 120 d'accueil de l'arbre 221 du support de rail 200, d'axe confondu avec l'axe de support A3. Ce puits cylindrique 120 est ouvert sur le côté extérieur du montant 110 pour accueillir l'arbre 221 du support de rail 200. Il est ici fermé sur le côté intérieur du montant 110. Il présente un diamètre égal, au jeu près, au diamètre de l'arbre 221, de manière à laisser le support de rail 200 libre de basculer autour de l'axe de support A3, lorsque son arbre 221 est engagé dans le puits cylindrique 120 du châssis 120 et que son axe de pivot A2 est confondu avec l'axe de support A3.

Pour rigidifier l'articulation formée entre l'arbre 221 du support de rail et le logement 120 du châssis, le support de rail 200 comporte deux parois inclinées 222 (figure 4) qui s'étendent à partir de la face arrière 212 de la plate-forme 210, à 45 degrés par rapport à celle-ci, parallèlement à l'axe de pivot A2.

Ces parois inclinées 222 forment ainsi avec la plate-forme 210 une fourche à engager sur l'extrémité libre du montant 110 du châssis 100. Elles sont en outre agencées pour prendre appui sur ce montant 110 lorsque le support de rail 200 est verrouillé en position droite ou inclinée sur le châssis 100.

Dans ce mode de réalisation du coffret de distribution électrique 1, les premiers et seconds moyens de verrouillage 230 du pivot 220 permettant de bloquer le rail de montage 300 en position droite ou inclinée sont confondus.

Ils comportent des moyens de blocage 235 agencés pour coopérer, à la faveur du coulissement du support de rail 200 depuis sa position de libération vers sa position d'activation, avec des moyens de blocage complémentaires 135 du châssis 100 afin de bloquer rigidement le pivotement de ladite plate-forme 210 par rapport au châssis 100.

Comme le montrent plus particulièrement les figures 4, 12 et 15, ces moyens de blocage comportent deux ergots 235 adaptés à s'accrocher aux moyens de blocage complémentaires 135 du châssis 100 lorsque le support de rail 200 est en position d'activation.

Par conséquent, alors que les moyens d'arrêt 230 permettent de bloquer la mobilité de translation du support de rail 200 par rapport au rail de montage 300 et donc par rapport au châssis 100, ces deux ergots 235 permettent de bloquer la mobilité de rotation de cette liaison pivot.

Ces deux ergots 235 s'étendent en longueur à partir de la paroi tombante 250 du support de rail, parallèlement à l'arbre 221, vers l'intérieur du châssis 100, sur des longueurs ici égales à celle de l'arbre 221. Ces ergots 235 présentent des sections transversales triangulaires.

Comme le montrent plus particulièrement les figures 3, 12 et 15, les moyens de blocage complémentaires 135 du châssis comportent, sur les deux faces latérales du montant 110, deux pans inclinés 137, et, en renfoncement de la face extérieure du montant 110, trois rainures 136 parallèles.

Les deux pans inclinés 137 sont orientés vers l'avant et vers l'extérieur du montant 110. Les trois rainures 136 s'étendent quant à elles depuis la face arrière du longeron 101 correspondant du châssis 100, vers l'avant, jusqu'à proximité du logement 120 du montant 110, suivant des axes orthogonaux à l'axe de support A3. Les extrémités avant de ces trois rainures 136 sont biseautées de manière à pouvoir accueillir les ergots 235 de section triangulaire du support de rail 200.

Les deux rainures 136 latérales sont situées à une distance l'une de l'autre égale à la distance séparant les deux ergots 235 du support de rail 200. La rainure centrale 136 est quant à elle située à une distance des deux pans inclinés 137 égale à la distance séparant les deux ergots 235 du support de rail 200.

Ainsi, lorsque le support de rail 200 est en position droite sur le châssis 100 et en position d'activation sur le rail de montage 300, ses deux ergots 235 sont respectivement engagés dans les deux rainures 136 latérales du montant 110 (figure 12), si bien que la liaison pivot glissant est verrouillée dans cette position droite.

Lorsque le support de rail 200 est en position basculée sur le châssis 100 et en position d'activation sur le rail de montage 300, ses deux ergots 235 sont respectivement engagés dans la rainure 136 centrale et contre l'un des pans inclinés 137 du montant 110 (figure 15), si bien que la liaison pivot glissant est verrouillée dans cette position basculée.

Par ailleurs, lorsque le support de rail 200 est en position de libération sur le rail de montage 300, ses deux ergots 235 sont dégagés des rainures 136 et des pans inclinés 137 du montant 110, si bien que la liaison pivot glissant est libre en rotation autour de l'axe de pivot A2.

Pour assurer l'immobilité du rail de montage 300 par rapport au châssis 100 lorsque l'installateur manoeuvre le support de rail 200, le châssis 100 comporte une butée agencée pour bloquer en translation le rail de montage 300 suivant son axe longitudinal A1.

Telle que représentée sur les figures 3 et 9, cette butée 112 est portée par le montant 110 du châssis 100. Elle est plus précisément portée par un rebord 111 qui borde le sommet semi-cylindrique du montant 110, du côté de la face intérieure du montant 110. Cette butée 112 est alors formée par l'extrémité rectangulaire de ce rebord 111 et est agencée pour coopérer avec l'ouverture d'accueil 310 pratiquée dans le rail de montage 300.

L'ouverture d'accueil 310 présente en correspondance une troisième partie 314 de section rectangulaire qui est située à l'opposé de la partie d'engagement 311 de l'ouverture d'accueil 310 et qui est en partie délimitée par les languettes 313 de cette ouverture d'accueil 310.

La butée 112 présente une largeur L2 égale, au jeu près, à la longueur de la troisième partie 314 de l'ouverture d'accueil 310. De cette manière, lorsque l'installateur manoeuvre le support de rail 200 pour le faire coulisser entre sa position d'activation et sa position de libération, cette butée 112 permet de maintenir le rail de montage 300 en position fixe par rapport au châssis 100 suivant l'axe longitudinal A1.

Cette butée 122 présente par ailleurs une longueur L1 légèrement inférieure à la largeur de la troisième partie 314 de l'ouverture d'accueil 310. De cette manière, elle ne bloque pas le basculement du rail de montage 300 autour de l'axe de pivot A2.

Dans le mode de réalisation du coffret de distribution électrique 1 représenté sur les figures, le rail de montage 300 comporte des moyens supplémentaires pour renforcer sa liaison glissière avec le support de rail 200.

Ces moyens comportent ici une languette 340 qui s'étend à partir du bord extérieur de l'ouverture d'accueil 310 prévue dans le rail de montage 300, vers l'arrière, perpendiculairement à la paroi principale 301 du rail de montage.

Cette languette 340 est formée lors des opérations de découpe et de pliage du rail de montage 300 et est issue de la matière extraite de la paroi principale 301 pour libérer l'ouverture d'accueil 310.

Cette languette 340 est découpée de telle manière qu'elle présente une forme globalement rectangulaire, de largeur égale à la distance séparant les deux ergots 235 du support de rail 200. Elle présente plus précisément une partie avant évasée qui est raccordée à la paroi principale 301, et une extrémité libre arrière élargie pour définir deux dents 342 en saillie de ses deux tranches. Cette languette 340 présente par ailleurs, dans sa partie avant, une ouverture 341 de diamètre égal au diamètre de l'arbre 221 du support de rail 200.

La plate-forme 210 du support de rail 200 comporte en correspondance une ouverture de passage 215 pour cette languette 340, qui présente une largeur égale à la largeur maximale de la languette 340 et une longueur supérieure à la longueur de l'ouverture d'arrêt 330 du rail de montage 300. Grâce à ces dimensions, la languette 340 peut naviguer dans l'ouverture de passage 215 sans former obstacle au coulissement du support de rail 200 sous le rail de montage 300.

Lors de la mise en place du rail de montage 300 sur le support de rail 200, l'installateur engage la languette 340 du rail de montage 300 au travers de l'ouverture de passage 215 du support de rail 200, puis il fait coulisser cette languette 340 entre les deux ergots 235 du support de rail 200, de telle sorte que l'ouverture 341 de la languette 340 s'engage sur l'arbre 221 du support de rail 200 et que les tranches et les dents 342 de la languette 340 s'accrochent aux ergots 235. Cette languette 340 permet ainsi de rigidifier la liaison glissière prévue entre le support de rail 200 et le rail de montage 300.

Le support de rail 200 comporte par ailleurs des moyens anti-retour qui permettent d'éviter, une fois que le rail de montage 300 et le support de rail 200 ont été assemblés, qu'ils puissent se désunir.

Ces moyens anti-retour, qui apparaissent plus particulièrement sur les figures 5 et 6, sont ici formés par deux crochets 216 qui s'étendent à partir des bords de l'ouverture de passage 215 prévue dans la plate-forme 210, et qui sont retournés vers l'avant et vers l'extérieur du support de rail 200.

Comme le montre la figure 4, ces crochets 216 sont situés à une faible distance du bord intérieur de l'ouverture de passage 215, pour délimiter avec celui-ci des fentes 217 permettant d'engager la languette 340 au travers de l'ouverture de passage 215 sans qu'elle ne vienne buter contre ces crochets 216.

Lors de la mise en place du rail de montage 300 sur le support de rail 200, l'installateur engage donc la languette 340 du rail de montage 300 au travers des fentes 217 du support de rail 200. Lorsqu'il fait coulisser la languette 340 dans l'ouverture de passage 215, il force cette languette 340 à passer au-delà des deux crochets 216 du support de rail 200, de telle manière que ces crochets interdisent ensuite le retour de la languette 340 en regard des fentes 217. La languette 340 ne peut donc plus être extraite de l'ouverture de passage 215 puisque son ouverture 341 ne peut plus être sortie de l'arbre 221, ce qui assure la durabilité de la liaison glissière prévue entre le rail de montage 300 et le support de rail 200.

Comme le montre la figure 10, le support de rail 200 comporte par ailleurs deux flancs 260 parallèles, qui s'étendent entre la face arrière de sa plate-forme 210 et la face extérieure de sa paroi tombante 250. Ces deux flancs 260 sont situés à distance l'un de l'autre et permettent de guider le doigt de l'installateur sous la zone élastiquement déformable de la plate-forme 210 lorsqu'il souhaite manoeuvrer les moyens de verrouillage 230 de ce support de rail 200.

L'assemblage du rail de montage 300 (équipé de ses disjoncteurs) sur le châssis 100 du coffret de distribution électrique 1 est alors réalisé de la manière suivante.

Au cours d'une première opération, l'installateur équipe le rail de montage 300 de deux supports de rail 200.

Il engage pour cela les deux languettes 340 du rail de montage 300 au travers des ouvertures de passage 215 des plates-formes 210 des deux supports de rail 200, dans les fentes 217, jusqu'à ce que la face arrière de la paroi principale 301 du rail de montage 300 s'applique contre les faces avant des plates-formes 210 des supports de rail 200.

Au cours d'une seconde opération, l'installateur rapporte cet ensemble sur les montants 110 des longerons 101 du châssis 100.

Il enfourche pour cela les parois inclinées 222 des deux supports de rail 200 sur les extrémités libres des montants 110 correspondants du châssis 100, de telle manière que les arbres 221 de ces supports de rail 200 se positionnent en regard des logements 120 de ces montants 110. Dans cette position, les butées 112 prévues aux extrémités des montants 110 du châssis 100 sont engagées dans les troisièmes parties 314 des ouvertures d'accueil 310 du rail de montage 300, ce qui bloque toute translation du rail de montage 300 par rapport au châssis 100 suivant son axe longitudinal A1.

L'installateur fait ensuite coulisser les supports de rail 200 en direction l'un de l'autre, suivant l'axe longitudinal A1, de telle manière que les rainures 242 des plots 241 des supports de rail 200 viennent en prise avec les languettes 313 des ouvertures d'accueil 310 du rail de montage 300.

Il applique à cet effet un effort sur les parties élastiquement déformable des plates-formes 210 des supports de rail 200 afin de surélever les têtes 234 des pattes d'encliquetage 232 de ces supports de rail 200 au-dessus de la paroi principale 301 du rail de montage. Il fait ensuite coulisser les supports de rail 200 et relâche cet effort seulement lorsque les têtes 234 des pattes d'encliquetage 232 sont situées au-dessus des élargissements 331 intérieurs des ouvertures d'arrêt 330 du rail de montage 300. Ainsi, les supports de rail sont bloqués en position d'activation sur le rail de montage 300.

Lors de ce mouvement, les crochets 216 des supports de rail 200 passent au-delà des languettes 340 du rail de montage 300, interdisant ainsi le démontage du rail de montage 300, et les arbres 221 des supports de rail 200 s'engagent au travers des ouvertures 341 des languettes 340 du rail de montage 300 et des logements 120 des montants 110 du châssis (voir figure 9).

Dans cette position, les ergots 225 des supports de rail 200 sont engagés dans les deux rainures latérales 136 des montants 110 du châssis 100, si bien que le rail de montage 300 est verrouillé en position droite.

Le branchement des câbles électriques du réseau électrique local aux disjoncteurs 401 portés par ce rail de montage 300 est alors réalisé de la manière suivante.

L'installateur applique tout d'abord un effort sur les parties élastiquement déformable des plates-formes 210 des supports de rail 200 afin de surélever les têtes 234 des pattes d'encliquetage 232 de ces supports de rail 200 au-dessus de la paroi principale 301 du rail de montage. Il fait ensuite coulisser les supports de rail 200 pour les éloigner l'un de l'autre et relâche cet effort seulement lorsque les têtes 234 des pattes d'encliquetage 232 sont situées au-dessus des élargissements 331 extérieurs des ouvertures d'arrêt 330 du rail de montage 300. Ainsi, les supports de rail sont bloqués en position de libération sur le rail de montage 300.

Dans cette position, les ergots 225 des supports de rail 200 sont situés à l'extérieur des rainures 136 des montants 110 du châssis. Les arbres 221 des supports de rail 200 restent en revanche engagés dans les logements 120 des montants 110 du châssis, si bien que le rail de montage 300 est libre de basculer autour de l'axe de pivot A2.

L'installateur peut alors faire basculer le rail de montage 300 soit vers le haut, soit vers le bas, selon que les entrées de câble des disjoncteurs 401 sont respectivement tournées vers le bas ou vers le haut du châssis 100.

Comme le montre la figure 15, en position basculée, le bord arrière de l'une des parois inclinées 222 de chaque support de rail 200 vient en appui contre l'un des pans inclinés 137 du montant 110 correspondant du châssis 100, ce qui limite le basculement du rail de montage 300 autour de l'axe de pivot A2.

Pour bloquer le rail de montage 300 dans cette position basculée, l'installateur manoeuvre alors à nouveau les pattes d'encliquetage 232 des supports de rail 200 pour les placer en position d'activation.

Le rail de montage 300 est ainsi maintenu fixe dans une position qui facilite les opérations de câblage des disjoncteurs 401.

Une fois les disjoncteurs 401 branchés, l'installateur rétablit le rail de montage 300 en position droite, en manoeuvrant les pattes d'encliquetage 232 des supports de rail 200 suivant un procédé identique à celui exposé ci-dessus.

En particulier, on pourra en variante prévoir que l'arbre de l'articulation prévue entre le support de rail et le châssis soit porté non pas par le support de rail, mais plutôt par le châssis.

## Revendications

1. Coffret ou tableau de distribution électrique (1) comportant un châssis (100) avec un fond (102) à appliquer contre une paroi murale, au moins un rail de montage (300) d'appareillages électriques modulaires (401), et au moins deux supports de rail (200), dans lequel chaque support de rail (200) comprend :
- une plate-forme (210) d'accueil d'une extrémité dudit rail de montage (300),
- un pivot (220) qui est situé au droit de ladite plate-forme (210), c'est-à-dire situé à l'arrière du rail de montage (300), dans l'espace délimité par les deux demi-plans qui s'étendent respectivement à partir des deux bords longitudinaux du rail de montage (300) perpendiculairement à celui-ci, et qui est monté sur le châssis (100) pour permettre à ladite plate-forme (210) de pivoter par rapport audit châssis (100) entre une position droite dans laquelle elle s'étend sensiblement parallèlement au fond (102) du châssis (100) et une position basculée, et
- des premiers moyens de verrouillage (230) dudit pivot (220) pour bloquer ladite plate-forme (210) en position droite sur le châssis (100),
**caractérisé en ce que** :
- ladite plate-forme (210) porte des moyens de montage à coulissement (240) du rail de montage (300) suivant un axe longitudinal (A1),
- ledit pivot (220) forme avec le châssis (100) une liaison pivot glissant d'axe de pivot (A2) parallèle audit axe longitudinal (A1), et
- les premiers moyens de verrouillage (230) sont actionnables à la faveur du coulissement du support de rail (200) par rapport au châssis (100).

2. Coffret ou tableau de distribution électrique (1) selon la revendication 1, dans lequel chaque support de rail (200) comporte des seconds moyens de verrouillage (230) dudit pivot (220) pour fixer ladite plate-forme (210) en position basculée sur le châssis (100).

3. Coffret ou tableau de distribution électrique (1) selon la revendication 2, dans lequel lesdites positions droite et basculée de ladite plate-forme (210) sont séparées angulairement d'un angle compris entre 15 et 30 degrés, préférentiellement égal à 25 degrés.

4. Coffret ou tableau de distribution électrique (1) selon l'une des revendications 2 et 3, dans lequel lesdits premiers et seconds moyens de verrouillage (230) sont confondus.

5. Coffret ou tableau de distribution électrique (1) selon l'une des revendications 1 à 4, dans lequel ledit pivot (220) comporte un arbre cylindrique de révolution autour dudit axe de pivot (A2), engagé dans un logement (120) qui est prévu sur le châssis (100) et qui est cylindrique de révolution autour d'un axe de support (A3).

6. Coffret ou tableau de distribution électrique (1) selon l'une des revendications 1 à 5, dans lequel lesdits premiers moyens de verrouillage (230) comportent :
- des moyens d'arrêt (231) coopérant avec des moyens d'arrêt complémentaires (331) du rail de montage (300) pour bloquer rigidement le coulissement du rail de montage (300) sur ladite plate-forme (210), et
- des moyens de blocage (235) coopérant avec des moyens de blocage complémentaires (135) du châssis (100) pour bloquer rigidement le pivotement de ladite plate-forme (210) par rapport audit châssis (100).

7. Coffret ou tableau de distribution électrique (1) selon la revendication 6, dans lequel lesdits moyens d'arrêt (231) comportent un clip (232) agencé pour se clipser sur le rail de montage (300) en deux positions distinctes, dont une position d'activation dans laquelle lesdits moyens de blocage (235) sont verrouillés. sur les moyens de blocage complémentaires (135) du châssis (100), et une position de libération dans laquelle lesdits moyens de blocage (235) sont déverrouillés.

## Patentansprüche

1. Elektrischer Verteilerkasten oder elektrische Verteilertafel (1), der/die einen Rahmen (100) mit einem an einer Wand anzubringenden Boden (102) umfasst, sowie mindestens eine Montageschiene (300) für modulierbare elektrische Geräte (401), und mindestens zwei Schienenstützen (200), wobei jede Schienenstütze (200) umfasst:
- eine Aufnahmeplattform (210) für ein Ende der Montageschiene (300),
- einen Drehzapfen (220), der sich direkt unter der Plattform (210) befindet, d. h. hinter der Montageschiene (300) in dem durch die zwei Halbebenen, die sich jeweils von den beiden Längsrändern der Montageschiene (300) ausgehend senkrecht zu ihr erstrecken, begrenzten Raum, und der auf den Rahmen (100) montiert ist, um der Plattform (210) ein Schwenken in Bezug zum Rahmen (100) zwischen einer geraden Position, in der sie sich im wesentlichen parallel zum Boden (102) des Rahmens (100) befindet, und einer geschwenkten Position ermöglicht, und
- erste Verriegelungsmittel (230) des Drehzapfens (220), um die Plattform (210) in gerader Position auf dem Rahmen (100) zu blockieren,
**dadurch gekennzeichnet, dass**:
- die Plattform (210) entlang einer Längsachse (A1) gleitende Montagemittel (240) für die Montageschiene (300) aufweist,
- der Drehzapfen (220) mit dem Rahmen (100) eine gleitende Zapfenverbindung für die zur Längsachse (A1) parallele Drehzapfenachse (A2) bildet, und
- die ersten Verriegelungsmittel (230) zum Gleiten der Schienenstütze (200) in Bezug zum Rahmen (100) betätigt werden können.

2. Elektrischer Verteilerkasten oder elektrische Verteilertafel (1) nach Anspruch 1, bei dem/der jede Schienenstütze (200) zweite Verriegelungsmittel (230) für den Drehzapfen (220) umfasst, um die Plattform (210) in der geschwenkten Position auf dem Rahmen (100) zu fixieren.

3. Elektrischer Verteilerkasten oder elektrische Verteilertafel (1) nach Anspruch 2, bei dem/der sich die gerade und geschwenkte Position der Plattform (210) winkelmäßig um einen Winkel zwischen 15 und 30 Grad, vorzugsweise um einen Winkel von 25 Grad voneinander unterscheiden.

4. Elektrischer Verteilerkasten oder elektrische Verteilertafel (1) nach einem der Ansprüche 2 und 3, bei dem/der sich die ersten und zweiten Verriegelungsmittel (230) überschneiden.

5. Elektrischer Verteilerkasten oder elektrische Verteilertafel (1) nach einem der Ansprüche 1 bis 4, bei dem/der der Drehzapfen (220) eine zylinderförmige Drehwelle um die Drehachse (A2) umfasst, die in einer auf dem Rahmen (100) vorgesehenen Aufnahme (120) sitzt und sich kreisförmig um eine Stützachse (A3) dreht.

6. Elektrischer Verteilerkasten oder elektrische Verteilertafel (1) nach einem der Ansprüche 1 bis 5, bei dem/der die ersten Verriegelungsmittel (230) umfassen:
- mit komplementären Arretiermitteln (331) der Montageschiene (300) zusammenwirkende Arretiermittel (231), um das Gleiten der Montageschiene (300) auf der Plattform (210) sicher zu arretieren, und
- mit komplementären Blockiermitteln (135) des Rahmens (100) zusammenwirkende Blockiermittel (235), um das Schwenken der Plattform (210) in Bezug zum Rahmen (100) sicher zu blockieren.

7. Elektrischer Verteilerkasten oder elektrische Verteilertafel (1) nach Anspruch 6, bei dem/der die Arretiermittel (231) einen Clip (232) umfassen, der angeordnet ist, um in zwei unterschiedlichen Positionen auf die Montageschiene (300) geclipst zu werden, wobei eine davon eine aktivierte Position ist, in der die Blockiermittel (235) auf den komplementären Blockiermitteln (135) des Rahmens (100) verriegelt sind, und eine davon eine freigegebene Position ist, in der die Blockiermittel (235) entriegelt sind.

## Claims

1. An electrical panel or box (1) comprising a frame (100) with a rear face (102) for applying against a wall surface, at least one mounting rail (300) for mounting modular electrical equipment (401), and at least two rail supports (200), wherein each rail support (200) comprises:
· a platform (210) for receiving one end of said mounting rail (300);
· a pivot (220) that is situated in register with said platform (210), i.e. situated behind the mounting rail (300), in the space defined by the two half-planes that extend respectively from the two longitudinal edges of the mounting rails (300) perpendicularly thereto, and that is mounted on the frame (100) so as to enable said platform (210) to pivot relative to said frame (100) between an upright position, in which it extends substantially parallel to the rear face (102) of the frame (100), and a tilted position; and
· first locking means (230) for locking said pivot (220) so as to block said platform (210) in the upright position on the frame (100);
said electrical panel or box being **characterized in that**:
· said platform (210) carries mounting means (240) for mounting the mounting rail (300) slidably along a longitudinal axis (A1);
· said pivot (220) co-operates with the frame (100) to form a sliding pivot connection of pivot axis (A2) that is parallel to said longitudinal axis (A1); and
· the first locking means (230) are actuatable by sliding the rail support (200) relative to the frame (100).

2. An electrical panel or box (1) according to claim 1, wherein each rail support (200) includes second locking means (230) for locking said pivot (220) so as to fasten said platform (210) in the tilted position on the frame (100).

3. An electrical panel or box (1) according to claim 2, wherein said upright and tilted positions of said platform (210) are separated angularly by an angle lying in the range 15° to 30°, preferably equal to 25°.

4. An electrical panel or box (1) according to claim 2 or claim 3, wherein said first and second locking means (230) are the same locking means.

5. An electrical panel or box (1) according to any one of claims 1 to 4, wherein said pivot (220) includes a pin that is circularly cylindrical about said pivot axis (A2) and that is engaged in a housing (120) that is provided on the frame (100) and that is circularly cylindrical about a support axis (A3).

6. An electrical panel or box (1) according to any one of claims 1 to 5, wherein said first locking means (230) comprise:
· stop means (231) that co-operate with complementary stop means (331) of the mounting rail (300) for rigidly blocking the sliding of the mounting rail (300) on said platform (210); and
· blocking means (235) that co-operate with complementary blocking means (135) of the frame (100) for rigidly blocking the pivoting of said platform (210) relative to said frame (100).

7. An electrical panel or box (1) according to claim 6, wherein said stop means (231) include a clip (232) that is arranged so as to clip on the mounting rail (300) in two distinct positions, an activation position in which said blocking means (235) are locked on the complementary blocking means (135) of the frame (100), and a release position in which said blocking means (235) are unlocked.
